# EUROPÄISCHE PATENTSCHRIFT

(11) **EP 1 306 290 B1**
(45) Veröffentlichungstag und Bekanntmachung des Hinweises auf die Patenterteilung: **16.11.2005**
(21) Anmeldenummer: 02021073.8
(22) Anmeldetag: 21.09.2002
(51) Int. Cl.: B62D 21/15, B62D 27/06, B62D 21/11

(54) **Frontpartie eines Kraftfahrzeugs**
Front portion of a vehicle
Structure avant de véhicule

(30) Priorität: 18.10.2001 DE 10151524
(43) Veröffentlichungstag der Anmeldung: 02.05.2003
(73) Patentinhaber: DaimlerChrysler AG, 70567 Stuttgart (DE)
(72) Erfinder: Röhringer, Arno, 71254 Ditzingen (DE); Schnabel, Alfred, 75382 Althengstett (DE); Schöneburg, Rodolfo, Dr., 72379 Hechingen (DE)

(56) Entgegenhaltungen:
- EP-A- 0 714 824
- US-A- 6 099 039
- US-B1- 6 428 046
- PATENT ABSTRACTS OF JAPAN vol. 2002, no. 10, 10. Oktober 2002 (2002-10-10) & JP 2002 160663 A (NISSAN MOTOR CO LTD), 4. Juni 2002 (2002-06-04)
- PATENT ABSTRACTS OF JAPAN vol. 017, no. 610 (M-1508), 10. November 1993 (1993-11-10) & JP 05 185951 A (NISSAN MOTOR CO LTD), 27. Juli 1993 (1993-07-27)
- PATENT ABSTRACTS OF JAPAN vol. 2002, no. 10, 10. Oktober 2002 (2002-10-10) & JP 2002 160664 A (NISSAN MOTOR CO LTD), 4. Juni 2002 (2002-06-04)
- PATENT ABSTRACTS OF JAPAN vol. 1999, no. 11, 30. September 1999 (1999-09-30) & JP 11 171046 A (HONDA MOTOR CO LTD), 29. Juni 1999 (1999-06-29)
- PATENT ABSTRACTS OF JAPAN vol. 2000, no. 04, 31. August 2000 (2000-08-31) & JP 2000 016327 A (TOYOTA MOTOR CORP), 18. Januar 2000 (2000-01-18)

## Beschreibung

Die Erfindung betrifft eine Frontpartie eines Kraftfahrzeugs, insbesondere eines Personenkraftwagens, mit den Merkmalen des Oberbegriffs des Anspruchs 1.

Aus der DE 195 47 491 C1 ist eine derartige Frontpartie eines Personenkraftwagens bekannt, die zwei im wesentlichen parallel zur Fahrzeuglängsrichtung verlaufende Längsträger sowie einen Integralträger aufweist, wobei an diesem Integralträger eine Antriebseinheit des Personenkraftwagens gelagert ist. Der Integralträger weist an jeder Fahrzeugseite einen im wesentlichen parallel zur Fahrzeuglängsrichtung verlaufenden Basisträger auf, der jeweils mit einer vorderen Tragsäule und mit einer hinteren Tragsäule unten an einem der Längsträger befestigt ist. Bei der bekannten Frontpartie ist außerdem eine mittlere Tragsäule vorgesehen, mit welcher der Basisträger zwischen der vorderen Tragsäule und der hinteren Tragsäule zusätzlich am Längsträger befestigt ist. Die Längsträger sind zumindest zwischen der vorderen Tragsäule und der hinteren Tragsäule in Fahrzeugslängsrichtung deformierbar ausgebildet, das heißt, im Crashfall kann sich der Längsträger in dafür vorgesehenen Zonen deformieren, um dadurch Aufprallenergie zu absorbieren. Durch derartige Maßnahmen kann im Crashfall die Belastung der Fahrzeuginsassen reduziert werden, wodurch sich deren Überlebenswahrscheinlichkeit erhöht.

Eine andere Frontpartie ist aus der JP 05-185 951 bekannt und umfasst zwei im wesentlichen parallel zur Fahrzeuglängsrichtung verlaufende Längsträger sowie einen Integralträger, an dem eine Antriebseinheit des Kraftfahrzeugs gelagert ist. Der Integralträger weist an jeder Fahrzeugseite einen im wesentlichen parallel zur Fahrzeugslängsrichtung verlaufenden Basisträger auf, der jeweils vorne mit einer Tragsäule unten an einem der Längsträger und hinten direkt an einem Karosseriebauteil befestigt ist. Während jeder Längsträger in Fahrzeugslängsrichtung deformierbar ausgebildet ist, besitzt jeder Basisträger in Fahrzeuglängsrichtung eine größere Steifigkeit als der jeweils zugeordnete Längsträger. Außerdem sind die vorderen Endbereiche und die hinteren Endbereiche der Basisträger abgewinkelt und so ausgebildet, dass sie bei einer Relativverstellung zwischen Basisträger und Längsträger in Fahrzeugslängsrichtung um im wesentlichen quer zur Fahrzeuglängsrichtung verlaufende Schwenkachsen verschwenken.

Bei einer derartigen Frontpartie ist der Integralträger so mit der Karosserie gekoppelt, dass er im Crashfall relativ zu den Längsträgern in Fahrzeugslängsrichtung verschiebbar ist. Durch diese Maßnahme bewirkt der Integralträger keine Verstärkung der deformierbaren Zonen des Längsträgers, so dass sich deren energieabsorbierende Wirkung im wesentlichen ungehindert entfalten kann. Durch die Verschiebbarkeit des Integralträgers ergibt sich auch eine Verschiebbarkeit der daran angebundenen Komponenten, wie z.B. die Antriebseinheit, wodurch die zur Deformierung vorgesehene Zone, sogenannte "Knautschzone", in Fahrzeuglängsrichtung größer dimensioniert werden kann.

Bei Frontpartien dieser Art wird diese gezielte Verschwenkbarkeit oder Verschiebbarkeit des Integralträgers dadurch erreicht, dass dessen Basisträger bezüglich der Fahrzeuglängsrichtung besonders formstabil ausgebildet sind und so eine größere Steifigkeit aufweisen, als der jeweils zugeordnete Längsträger. Im Crashfall bewirkt somit eine Frontalbelastung der Frontpartie, dass sich die Längsträger in Fahrzeuglängsrichtung deformieren und dass sich die Basisträger zusammen mit den daran angebundenen Aggregaten und Komponenten nach hinten verschieben, wobei die Tragsäulen bzw. die abgewickelten Endbereiche so versagen bzw. sich so deformieren, dass sich für die Tragsäulen bzw. für die Endbereiche eine Schwenkbewegung um im wesentlichen quer zur Fahrzeugslängsrichtung verlaufende Schwenkachsen ergibt. Diese Schwenkverstellung der Tragsäulen bzw. der Endbereiche ermöglicht eine nahezu parallele Verstellung oder Verschiebung der Basisträger nach hinten. Üblicherweise sind die beiden Basisträger über Querträger miteinander verbunden und bilden somit einen Tragrahmen, an dem die genannten Aggregate oder Komponenten des Motorraums angebracht sind. Dementsprechend bildet der Integralträger zusammen mit den daran angebundenen Aggregaten und Komponenten eine Einheit, die sich im Crashfall im wesentlichen komplett nach hinten bewegen kann.

Aus der EP 0 714 824 A1 ist eine weitere Frontpartie bekannt, bei der unterhalb der Längsträger ein Integralträger angeordnet ist, der einen Basisträger aufweist, der über eine vordere Trägsäule und über eine hintere Tragsäule am jeweiligen Längsträger befestigt ist. Der Integralträger dient hierbei zur Lagerung einer Lenksäule und enthält einen Abschnitt, der eine gezielt reduzierte Steifigkeit aufweist, um auf diese Weise eine Art Sollknickstelle zu definiereren. Aus der obengenannten EP 0 714 824 A1 geht außerdem eine weitere Frontpartie hervor, bei der unterhalb der Längsträger ein Integralträger angeordnet ist, an dem eine Antriebseinheit des Fahrzeugs gelagert ist. Dieser Integralträger besitzt an jeder Fahrzeugsseite einen Basisträger, der über eine hintere Tragsäule an einem vom jeweiligen Längsträger verschiedenen Karosseriebauteil und über eine vordere Tragsäule sowie ein Zwischenstück am zugehörigen Längsträger befestigt ist.

Der US 6,099,039 ist eine Frontpartie entnehmbar, bei der ebenfalls unter zwei Längsträgern ein Intregralträger angeordnet ist, der an jeder Fahrzeugseite einen Basisträger aufweist, der über zwei Tragsäulen am jeweils zugeordneten Längsträger berfestigt ist. Desweiteren ist an diesen Basisträgern jeweils ein vorderes Lager und ein hinteres Lager für einen Querlenker eines Vorderrades ausgebildet.

Die vorliegende Erfindung beschäftigt sich mit dem Problem, für eine Frontpartie der eingangs genannten Art eine Ausführungsform anzugeben, die eine weitere Verbesserung der Insassensicherheit gewährleistet.

Dieses Problem wird erfindungsgemäß durch eine Frontpartie mit den Merkmalen des Anspruchs 1 gelöst.

Bei der erfindungsgemäßen Frontpartie ist an jedem Basisträger ein vorderes Lager und ein hinteres Lager für einen Querlenker eines Vorderrades ausgebildet. Derartige Querlenker sind besonders formstabil, wodurch sich die Stabilität des jeweiligen Basisträgers durch den daran gelagerten Querlenker deutlich erhöht. Diese Bauweise unterstützt somit die von der gattungsgemäßen Frontpartie beabsichtigte Wirkungsweise, den Integralträger im Bereich der Basisträger im Crashfall nahezu undeformiert nach hinten verstellen zu können, was die Insassensicherheit erhöht.

Außerdem sind bei der Frontpartie nach der Erfindung das vordere Lager unterhalb der vorderen Tragsäule und das hintere Lager unterhalb der hinteren Tragsäule angeordnet, wodurch der Basisträger im Bereich seiner höchsten Steifigkeit über die Anbindung an den Tragsäulen im Crashfall geführt verschwenkbar ist, was letzlich ebenfalls zur Sicherheit der Insassen beiträgt.

Entsprechend einer besonderen Ausführungsform ist ein Fahrzeugrahmen des Fahrzeugs im Bereich des Integralträgers so ausgebildet, dass jede hintere Tragsäule in Fahrzeuglängsrichtung nach hinten einen Freiraum bis zum Fahrzeugrahmen aufweist. Durch diese Bauweise wird auch rahmenseitig die Verschiebbarkeit der Basisträger gewährleistet.

Entsprechend einer zweckmäßigen Ausführungsform kann bei einem Fahrzeug mit antreibbaren Vorderrädern eine Antriebstripode zwischen den Tragsäulen und zwischen Basisträger und Längsträger von der Antriebseinheit zum jeweiligen Vorderrad durchgeführt sein. Bei einer Antriebstripode handelt es sich um eine gelenkige Welle, die von einem Getriebe der Antriebseinheit zum Vorderrad führt. Durch die gewählte Anordnung der Antriebstripode, insbesondere wenn diese nahe der hinteren Tragsäule positioniert ist, kann im Crashfall eine nachteilige Kollision der Antriebstripode mit einer Tragsäulen vermieden werden.

Sofern bei einer besonderen Ausführungsform des Kraftfahrzeugs hinter den hinteren Tragsäulen eine Lenkstange angeordnet ist, kann diese bei einer zweckmäßigen Weiterbildung in Fahrzeuglängsrichtung nach hinten einen Freiraum bis zum Fahrzeugrahmen aufweisen, wodurch gewährleistet werden kann, dass die Lenkstange im Crashfall vom sich verschiebenden Integralträger mit bewegt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: eine stark vereinfachte Prinzipdarstellung in einer Seitenansicht einer erfindungsgemäßen Frontpartie bei einem undeformierten Zustand und
- Fig. 2: eine Ansicht wie in Fig. 1, jedoch bei einem deformierten Zustand.

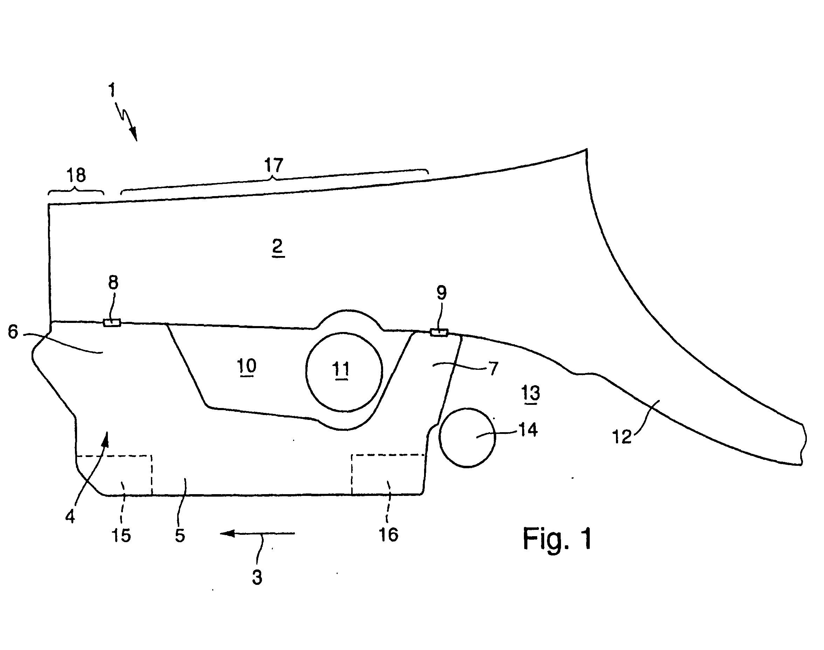

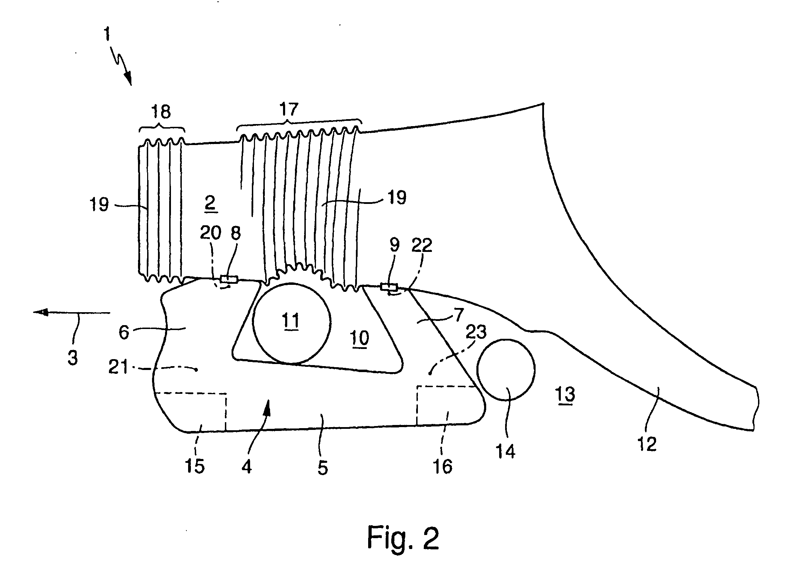

Entsprechend den Fig. 1 und 2 weist eine Frontpartie 1 eines im übrigen nicht dargestellten Kraftfahrzeugs, insbesondere eines Personenkraftwagens, an jeder Fahrzeugseite einen Längsträger 2 auf, der sich im wesentlichen parallel zu einer durch einen Pfeil symbolisierten Fahrzeugslängsrichtung 3 erstreckt. Unterhalb der Längsträger 2 ist ein Integralträger 4 angeordnet, der sich im wesentlichen über die gesamte Fahrzeugbreite erstreckt. Der Integralträger 4 weist an jeder Fahrzeugseite einen Basisträger 5 auf, der sich mit einem vertikalen Abstand zum zugeordneten Längsträger 2 im wesentlichen parallel zur Fahrzeuglängsrichtung 3 erstreckt. Beide Basisträger 5 sind üblicherweise über nicht gezeigte Querträger miteinander fest verbunden und bilden dadurch einen Tragrahmen, an dem verschiedene Aggregate und Komponenten des Fahrzeugs gelagert sind. Beispielsweise ist eine Antriebseinheit des Kraftfahrzeugs an diesem Tragrahmen, z.B. über entsprechende Motorlager, gelagert.

Jeder Basisträger 5 ist über eine vordere Tragsäule 6 und über eine hintere Tragsäule 7 fest mit dem zugehörigen Längsträger 2 verbunden. Die entsprechenden Verbindungsstellen sind mit 8 und 9 bezeichnet und jeweils nur symbolisch dargestellt. Die vordere Tragsäule 6 besitzt im undeformierten Zustand gemäß Fig. 1 eine nach vorn gerichtete Neigung, während die hintere Tragsäule 7 ausgehend vom Basisträger 5 nach hinten geneigt ist. Zwischen den Tragsäulen 6 und 7 und zwischen dem Längsträger 2 und dem Basisträger 5 ist ein Fenster 10 ausgebildet, in dem eine Antriebstripode 11 von innen nach außen hindurchgeführt ist, um so die Antriebseinheit mit einem nicht gezeigten, angetriebenen Vorderrad zu verbinden. Die Antriebstripode 11 ist im Fenster 11 nahe der hinteren Tragsäule 7 positioniert.

Des weiteren ist ein Fahrzeugrahmen 12 so ausgebildet, dass in Fahrzeugslängsrichtung 3 zwischen der hinteren Tragsäule 7 und dem Fahrzeugrahmen 12 ein Freiraum 13 ausgebildet ist. In diesem Freiraum 13 ist nahe der hinteren Tragsäulen 7 eine Lenkstange 14 angeordnet, die einen Bestandteil einer im übrigen nicht gezeigten Fahrzeuglenkung bildet.

Bei der hier gezeigten bevorzugten Ausführungsform besitzt jeder Basisträger 5 unterhalb der vorderen Tragsäule 6 ein vorderes Lager 15 und unterhalb der hinteren Tragsäule ein hinteres Lager 16. Die beiden Lager 15 und 16 dienen zur Lagerung eines nicht dargestellten Querlenkers des Vorderrads. Ein derartiger Querlenker ist üblicherweise als Bauteil mit hoher Steifigkeit ausgebildet, das im Rahmen üblicher Crashfälle quasi undeformierbar ist.

Jeder Längsträger 2 ist zumindest in einem Abschnitt 17, der sich zwischen den Tragsäulen 6 und 7 erstreckt, so ausgestaltet, dass er im Crashfall in Fahrzeuglängsrichtung 3 deformiert ist. Der hier gezeigte Längsträger 2 ist außerdem in einem Frontbereich 18 in Fahrzeugslängsrichtung 3 deformierbar ausgestaltet.

Erfindungsgemäß ist nun jeder Basisträger 5 so ausgestaltet, dass er in Fahrzeugslängsrichtung 3 eine größere Steifigkeit aufweist als der jeweils zugeordnete Längsträger 2.

Im Falle eines Frontalaufpralls des Fahrzeugs gegen ein Hindernis kommt zu einer frontalen Krafteinwirkung, die entsprechend Fig. 2 eine Deformation der Abschnitte 17 und 18 des Längsträgers 2 in Fahrzeuglängsrichtung 3 bewirkt. Dabei verkürzt sich die in der Fahrzeuglängsrichtung 3 gemessene Länge des Längsträgers 2. Eine entsprechende Faltenbildung 19, die im Crashfall in den Deformationszonen 17 und 18 auftritt, ist in Fig. 2 symbolisch dargestellt. Durch den zwischen den Tragsäulen 6 und 7 angeordneten deformierbaren Abschnitt 17 nimmt der Abstand der Befestigungsstellen 8 und 9, an denen die Tragsäulen 6 und 7 fest mit dem Längsträger 2 verbunden sind, entsprechend der Deformation ab. Durch die wirksamen Kräfte wird außerdem der Integralträger 4 bzw. dessen Tragrahmen mit den Basisträgern 5 parallel zu sich selbst nach hinten verschoben, wobei die hohe Steifigkeit der Basisträger 5, ggf. unterstützt durch die daran angelenkten, steifen Querträger, gewährleistet, dass sich die Basisträger 5 und somit der Tragrahmen dabei im wesentlichen nicht verformen. Insbesondere können die am Tragrahmen bzw. am Integralträger 4 angelenkten Aggregate und Komponente mit nach hinten verstellt werden.

Von besonderer Bedeutung ist hierbei die Ausgestaltung der Tragsäulen 6 und 7, die im Bereich ihrer Anbindung an den Längsträger 2 sowie im Bereich ihrer Anbindung an den jeweiligen Basisträger 5 verformbar ausgestaltet sind, derart, dass die Tragsäulen 6 und 7 im Verlauf des Crashs Schwenkbewegungen durchführen können, um Schwenkachsen, die quer zur Fahrzeuglängsrichtung 3 verlaufen und sich durch die jeweiligen Anbindungsstellen der Tragsäulen 6 und 7 hindurcherstrecken. Die jeweiligen Schwenkachsen sind in Fig. 2 symbolisch darstellt und mit 20, 21, 22 bzw. 23 bezeichnet.

Entsprechend Fig. 2 besitzt die vordere Tragsäule 6 nach dem Crash daher eine bezüglich des Basisträgers 5 nach hinten gerichtete Neigung. Das bedeutet, dass sich durch den Crash das obere Ende der vorderen Tragsäule 6 nach hinten am unteren Ende der vorderen Tragsäule 6 vorbei bewegt hat. In entsprechender Weise hat sich beim Crash das untere Ende der hinteren Tragsäule 7 am oberen Ende der hinteren Tragsäule 7 nach hinten vorbeibewegt, so dass die hintere Tragsäule 7 nach dem Crash bezüglich des Basisträgers 5 eine nach vorn gerichtete Neigung besitzt. Durch den Crash ist ein unteres Ende des Basisträgers 5 in den Freiraum 13 eingedrungen, wobei der sich verschiebende Integralträger 4 ggf. die Lenkstange 14 mit bewegt hat.

Im Unterschied dazu kann - bedingt durch ihre Anbindung - die Antriebstripode 11 beim Crash bezüglich des Längsträgers 2 relativ ortsfest bleiben. Durch die Anordnung dieser Antriebstripode 11 im Fenster 10 nahe der hinteren Tragsäule 7 kann sich der Integralträger 4 relativ zur Antriebstripode 11 nach hinten verschieben, ohne dass es zu einer Kollision zwischen Integralträger 4 und Antriebstripode 11 kommt. Dementsprechend besitzt der Verlauf der im Crashfall am Fahrzeug angreifenden Verzögerungen eine für die Passagiere günstige Kennlinie.

Fig. 2 zeigt deutlich, dass der Integralträger 4 im Bereich seiner Basisträger 5 auch nach dem Crash im wesentlichen unverformt ist, so dass mit einer relativ hohen Sicherheit gewährleistet werden kann, dass sich die am Integralträger 4 angebundenen Komponenten und Aggregate beim Crash nach hinten mitverstellen und so eine relativ weite Verformung des Längsträgers 2 zur Energieabsorption ermöglichen.

Da zwischen der vorderen Tragsäule 6 und der hinteren Tragsäule 7 keine weitere Tragsäule oder dergleichen angeordnet ist, besitzt das Fenster 10 eine relativ große Fläche, wodurch die durch dieses Fenster 10 hindurchragende Komponenten, wie z.B. die Antriebstripode 11, einen relativ großen Verstellweg besitzen.

## Patentansprüche

1. Frontpartie eines Kraftfahrzeugs, insbesondere eines Personenkraftwagens,
- mit zwei im wesentlichen parallel zur Fahrzeugslängsrichtung (3) verlaufenden Längsträgern (2) und
- mit einem Integralträger (4), an dem eine Antriebseinheit des Kraftfahrzeugs gelagert ist und der an jeder Fahrzeugseite einen im wesentlichen parallel zur Fahrzeuglängsrichtung (3) verlaufenden Basisträger (5) aufweist, der jeweils mit einer vorderen Tragsäule (6) und mit einer hinteren Tragsäule (7) unten an einem der Längsträger (2) befestigt ist,
- wobei jeder Längsträger (2) zumindest zwischen den Tragsäulen (6, 7) in Fahrzeuglängsrichtung (3) deformierbar ausgebildet ist,
**dadurch gekennzeichnet,**
- **dass** jeder Basisträger (5) ausschließlich über seine vordere Tragsäule (6) und seine hintere Tragsäule (7) unten am zugehörigen Längsträger (2) befestigt ist,
- **dass** jeder Basisträger (5) so ausgebildet ist, dass er in Fahrzeugslängsrichtung (3) eine größere Steifigkeit aufweist als der jeweils zugeordnete Längsträger (2),
- **dass** die Tragsäulen (6, 7) so ausgebildet und mit dem zugehörigen Längsträger (2) und/oder mit dem zugehörigen Basisträger (5) verbunden sind, dass sie bei einer Relativverstellung zwischen Basisträger (5) und Längsträger (2) in Fahrzeuglängsrichtung (3) um im wesentlichen quer zur Fahrzeuglängsrichtung verlaufende Schwenkachsen (20, 21, 22, 23) verschwenken,
- **dass** an jedem Basisträger (5) ein vorderes Lager (15) und ein hinteres Lager (16) für einen Querlenker eines Vorderrades ausgebildet ist,
- **dass** das vordere Lager (15) unterhalb der vorderen Tragsäule (6) und das hintere Lager (16) unterhalb der hinteren Tragsäule (7) angeordnet ist.

2. Frontpartie nach Anspruch 1,
**dadurch gekennzeichnet,**
**dass** jede hintere Tragsäule (7) in Fahrzeuglängsrichtung (3) nach hinten einen Freiraum (13) bis zum Fahrzeugrahmen (12) aufweist.

3. Frontpartie nach Anspruch 1 oder 2,
**dadurch gekennzeichnet,**
**dass** bei einem Fahrzeug mit antreibbaren Vorderrädern eine Antriebstripode (11) zwischen den Tragsäulen (6, 7) und zwischen Basisträger (5) und Längsträger (2) von der Antriebseinheit zum jeweiligen Vorderrad durchgeführt ist.

4. Frontpartie nach Anspruch 3,
**dadurch gekennzeichnet,**
**dass** die Antriebstripode (11) nahe der hinteren Tragsäule (7) angeordnet ist.

5. Frontpartie nach einem der Ansprüche 1 bis 4,
**dadurch gekennzeichnet,**
**dass** eine hinter den hinteren Tragsäulen (7) angeordnete Lenkstange (14) in Fahrzeuglängsrichtung (3) nach hinten einen Freiraum (13) bis zum Fahrzeugrahmen (2) aufweist.

## Claims

1. Front section of a vehicle, particularly a passenger vehicle,
- with two longitudinal supports (2), running essentially parallel to the lengthways direction (3) of the vehicle and
- an integral support on which a drive unit of the vehicle is supported and which has, on each side of the vehicle, a base support (5), running essentially parallel to the lengthways direction of the vehicle (3), that is, in each case, attached, below, with a front support column (6) and with a rear support column (7), to one of the longitudinal supports (2)
- whereby each longitudinal support (2) can, at least between the support columns (6, 7), be deformed in the longitudinal direction of the vehicle (3),
**characterized in that**
- each base support (5) is exclusively attached, below, by means of its front support column (6) and its rear support column (7), to the associated longitudinal support (2),
- each base support (5) is developed such that it has greater rigidity in the lengthways direction of the vehicle (3) than the associated lengthways support (2),
- the support columns (6, 7) are developed and connected to the associated base support (5), such that they swivel, in the case of relative displacement of the base support (5) and the lengthways support (2) in the lengthways direction of the vehicle (3), and **in that** they swivel around swivelling axes (20, 21, 22, 23) running essentially transversely in relation to the lengthways direction of the vehicle,
- there is, on each base support, a front bearing (15) and a rear bearing (16), for a transverse guide rod of a front wheel,
- the front bearing (15) is disposed below the front support column (6) and the rear bearing (16) is disposed below the rear support column (7).

2. Front section in accordance with claim 1,
**characterized in that**
each rear support column (7) has, towards the back as seen in the lengthways direction of the vehicle (3), a free space (13) going as far as the vehicle frame (12).

3. Front section in accordance with claims 1 or 2,
**characterized in that**,
in the case of a vehicle with front-wheel drive, a drive tripod (11) is implemented between the support columns (6, 7) and, between the base support (5) and the lengthways support, from the drive unit to the given front wheel.

4. Front section in accordance with claim 3,
**characterized in that**
the drive tripod (11) is disposed close to the rear support column (7).

5. Front section in accordance with one of claims 1 to 4,
**characterized in that**
a connecting rod disposed behind the rear support columns (7) has, towards the back as seen in the lengthways direction of the vehicle (3), a free space (13) extending as far as the vehicle frame (12).

## Revendications

1. Partie frontale d'un véhicule automobile, notamment d'un véhicule de tourisme
- avec deux longerons (2) s'étendant sensiblement à la parallèle de la direction longitudinale du véhicule (3) et
- avec un support intégral (4) sur lequel est logée une unité d'entraînement du véhicule automobile et qui sur chaque côté du véhicule comporte un support de base (5) s'étendant sensiblement à la parallèle de la direction longitudinale du véhicule (3), qui est respectivement fixé par une colonne porteuse antérieure (6) et par une colonne porteuse postérieure (7) sur le bas de l'un des longerons (2),
- chaque longeron (2) étant conçu de façon déformable au moins entre les colonnes porteuses (6, 7) en direction longitudinale du véhicule (3),
**caractérisée en ce que**
- chaque support de base (5) est exclusivement fixé par l'intermédiaire de sa colonne porteuse antérieure (6) et de sa colonne porteuse postérieure (7) sur le bas du longeron correspondant (2),
- chaque support de base (5) est conçu de façon à présenter une rigidité plus importante en direction longitudinale du véhicule (3) que le longeron (2) respectivement associé,
- les colonnes porteuses (6, 7) sont conçues et reliées au longeron correspondant (2) et/ou au support de base correspondant (5) de façon à pivoter en direction longitudinale du véhicule (3) autour d'axes de pivotement (20, 21, 22, 23) s'étendant sensiblement à la transversale de la direction longitudinale du véhicule (3), lors d'un déplacement relatif entre le support de base (5) et le longeron (2),
- sur chaque support de base (5) sont conçus un palier antérieur (15) et un palier postérieur (16) pour un bras de suspension d'une roue avant,
- le palier antérieur (15) est disposé sous la colonne porteuse antérieure (6) et le palier postérieur (16) est disposé sous la colonne porteuse postérieure (7).

2. Partie frontale selon la revendication 1, **caractérisée en ce que** chaque colonne porteuse postérieure (7) comporte un espace libre (13) jusqu'au châssis du véhicule (12), vers l'arrière, en direction longitudinale du véhicule (3).

3. Partie frontale selon la revendication 1 ou 2, **caractérisée en ce que** sur un véhicule à roues motrices avant, un tripode d'entraînement (11) est réalisé de l'unité d'entraînement vers la roue avant respective, entre les colonnes porteuses (6, 7) et entre le support de base (5) et le longeron (2).

4. Partie frontale selon la revendication 3, **caractérisée en ce que** le tripode d'entraînement (11) est disposé à proximité de la colonne porteuse postérieure (7).

5. Partie frontale selon l'une quelconque des revendications 1 à 4, **caractérisé en ce qu'**une colonne de direction (14) disposée derrière les colonnes porteuses postérieures (7) comporte un espace libre (13) jusqu'au châssis du véhicule (2), vers l'arrière, en direction longitudinale du véhicule (3).
